# Europäisches Patentamt
# European Patent Office
# Office européen des brevets

(19)

(11) Veröffentlichungsnummer: **0 032 166**
**B1**

(12) # EUROPÄISCHE PATENTSCHRIFT

(45) Veröffentlichungstag der Patentschrift:
25.01.84

(51) Int. Cl.³: **B 01 D 37/02, B 01 D 29/10**

(21) Anmeldenummer: **80106710.9**

(22) Anmeldetag: **31.10.80**

(54) **Anschwemmfilter.**

(30) Priorität: **19.12.79 DE 2951028**

(43) Veröffentlichungstag der Anmeldung:
**22.07.81 Patentblatt 81/29**

(45) Bekanntmachung des Hinweises auf die Patenterteilung:
**25.01.84 Patentblatt 84/4**

(84) Benannte Vertragsstaaten:
**AT CH DE FR IT LI**

(56) Entgegenhaltungen:
**DE - A - 2 627 725**
**FR - A - 421 914**

(73) Patentinhaber: **Erbslöh & Co. Geisenheimer Kaolinwerke, Erbslöhstrasse 1, D-6222 Geisenheim (DE)**

(72) Erfinder: **Jost, Robert, Ebernburg 2 Am Pfalzsprung 4, D-6552 Bad Münster a.St. (DE)**

(74) Vertreter: **Weber, Dieter, Dr. et al, Dr. Dieter Weber und Klaus Seiffert Patentanwälte Gustav-Freytag-Strasse 25, D-6200 Wiesbaden 1 (DE)**

Anschwemmfilter werden in verschiedenen Industrie- und Gewerbezweigen verwendet, wie beispielsweise bei der Klärung alkoholischer Getränke, wie insbesondere bei der Klärung von Wein. Bei dieser Kategorie von Filtern handelt es sich um Druckfilter, bei denen auf einem relativ grobporigen Stützgerüst ein Filterhilfsmittel angeschwemmt wird und die zu klärende Flüssigkeit unter Druck durch dieses Filterhilfsmittel hindurchgepresst wird. Das Filterhilfsmittel bildet genügend feine Poren, um feine Schwebstoffe aus der zu klärenden Flüssigkeit herauszufiltern.

Eine übliche Form derartiger Anschwemmfilter sind die Filterplatten, bei denen das angeschwemmte Filterhilfsmittel eine senkrecht angeordnete Schicht bildet. Derartige Filterplatten sind empfindlich gegen Druckstösse und Gasblasen, wie solche von Kohlendioxid oder eingesaugter Luft, sowie gegen Strömungsveränderungen. Die Anschwemmungen des Filtermediums fallen von den Filterplatten leicht ab, insbesondere wenn der Filterbetrieb zeitweilig unterbrochen wird. Hinzu kommt noch der Nachteil, dass die Rüstzeiten bei Filterplatten relativ gross sind.

Eine andere bekannte Anschwemmfiltertype ist die der waagerechten Tellerfilter mit porösen Platten. Diese sind relativ unempfindlich gegen Druckschwankungen, doch haben sie den Nachteil, dass sie häufig zu unterschiedlich dicken Ablagerungen von Filterhilfsmittel führen, so dass eine unterschiedliche Filterleistung an verschiedenen Stellen des Tellerfilters resultiert. Weiterhin besteht der Nachteil, dass eine Voranschwemmung von Filterhilfsmittel vor Filtrationsbeginn erforderlich ist und dass die Entfernung des Gemisches von Trub und Filterhilfsmittel kompliziert ist.

Die DE-A Nr. 2627725 beschreibt Anschwemmfilter mit einem topf- oder sackartigen Filtertuch, das sowohl eine senkrechte als auch eine waagerechte Filterfläche ergibt. Ein solches Filter besitzt daher die Nachteile beider eingangs geschilderten Filtertypen.

Noch eine weitere Filtertype für analoge Verwendung ist die der Filterkerzen. Bei diesen aber treten die gleichen Probleme wie bei den oben geschilderten senkrechten Filterplatten auf.

Schliesslich betrifft die FR-A Nr. 421914 ein Filter mit einer Papierfiltertüte, das nicht unter Druck arbeiten kann und kein Anschwemmfilter ist. Dass durch eine Winkelstellung der Filterfläche die Filterleistung bei Anschwemmfiltern erhöht wird, lässt sich dieser Druckschrift nicht entnehmen.

Die der Erfindung zugrundeliegende Aufgabe bestand somit darin, die Nachteile der bekannten Anschwemmfilter zu vermeiden und Anschwemmfilter zu bekommen, die eine gleichmässige Filterleistung auf der gesamten Filtrierfläche haben und bei denen das Filterhilfsmittel selbst beim Abstellen des Filterbetriebes auf der Filtrierfläche haften bleibt. Weiterhin ist erwünscht, dass keine Voranschwemmung des Filterhilfsmittels vor dem Filtrationsbeginn erforderlich ist und dass nach der Filtration das Gemisch von Filterhilfsmittel und Trub leicht entfernt werden kann.

Das erfindungsgemässe Anschwemmfilter mit einem Aussengehäuse mit einem Auslauf im Bereich seines unteren Endes und mit einem mit seinem oberen Rand druckdicht lösbar verbundenen Deckel mit einem Flüssigkeitseinlauf, einer Be- und Entlüftungseinrichtung, einer in Strömungsrichtung hinter dem Flüssigkeitseinlauf, diesen überdeckend angeordneten Prallplatte und einem an der Innenwand des Aussengehäuses anliegenden Siebeinsatz mit Einrichtungen, die das anzuschwemmende Filterhilfsmittel zurückhalten, ist dadurch gekennzeichnet, dass sich das Aussengehäuse nach unten verjüngt und in einem senkrechten Schnitt durch das Aussengehäuse die Wandung einen Winkel $\alpha$ von 30 bis 90° einschliesst.

Diese erfindungsgemässen Anschwemmfilter vereinigen in sich die Vorteile senkrechter Filterplatten und waagerechter Filterteller, ohne die Nachteile dieser bekannten Filtertypen zu haben. So baut sich bei der Anschwemmung das Filterhilfsmittel auf der Filtrierfläche in gleichmässiger Dicke auf, so dass die Filterleistung über der gesamten Fläche im wesentlichen gleich ist. Das Filterhilfsmittel haftet gut auf der Filtrierfläche, ohne zu dem unteren Ende der Vorrichtung abzurutschen, selbst wenn die Filtriertätigkeit unterbrochen und der Druck des Anschwemmfilters entlastet wird. Die Filtermasse, d.h. das Gemisch von Filterhilfsmittel und Trub, kann leicht entfernt werden, und es ist keine Voranschwemmung vor Filtrationsbeginn erforderlich, sondern das Filterhilfsmittel kann in der zu filtrierenden Flüssigkeit in das Anschwemmfilter eingeführt werden, so dass ein zusätzlicher Arbeitsgang entfällt und eine Verdünnung des ersten Teils der zu filtrierenden Flüssigkeit, wie des zu klärenden Weines, durch das Wasser der Voranschwemmung vermieden wird.

Das Anschwemmfilter nach der Erfindung ist vielfältig anwendbar, wie zur Anschwemmfiltration, zur Grobfiltration und auch als Aufnahmegefäss, z.B. für Ionenaustauscher oder Aktivkohle.

Das sich nach unten verjüngende Aussengehäuse kann unterschiedliche Form haben, wie die Form einer Pyramide, doch ist die Form vorzugsweise die eines Kegels, an dessen Spitze sich der Auslauf befindet.

Es ist möglich, den an der Innenwand des Aussengehäuses anliegenden Siebeinsatzes, der also im Falle eines kegelförmigen Aussengehäuses ebenfalls kegelförmig ausgebildet ist, so engmaschig zu machen, dass durch diesen Siebeinsatz selbst das anzuschwemmende Filterhilfsmittel zurückgehalten wird. Um den Durchlauf aber zu vergrössern, ist es bevorzugt, einen weitermaschigen Siebeinsatz zu verwenden, dessen Maschengrössen zu gross sind, um das Filterhilfsmittel direkt zurückzuhalten. In diesem Fall wird auf den Siebeinsatz eine Filtertüte oder ein tütenartig gefaltetes Rundfilter angeordnet, die aus einem Filtervlies oder Filtergewebe bestehen. Auf diesem Filtervlies oder Filtergewebe sammelt sich dann das angeschwemmte Filterhilfsmittel in üblicher Schichtdicke, wie in einer Dicke von 10 bis 15 cm, an.

Eine derartige Anordnung hat nicht nur den Vorteil grösserer Filtrationsgeschwindigkeit, sondern auch den, dass nach Beendigung der Filtration die gesamte Filtertüte mit dem Gemisch von Filterhilfsmittel und Trub einfach herausgenommen und weggeworfen und durch eine neue Filtertüte ersetzt werden kann.

Mit den Filtertüten kann das Filterhilfsmittel, wie Kieselgur, mit der Trubmasse rückstandslos entfernt werden und praktisch ohne weitere Trocknung oder sonstige Behandlung direkt deponiert werden. Eine Kieselgurbelastung des Abwassers erfolgt hierbei nicht, während bei bekannten Filtereinrichtungen immer wieder Filterhilfsmittel bei Reinigungsarbeiten in die Kanalisation gelangt und dort zu Ablagerungen und mit der Zeit zu Verstopfungen führt.

Der Siebeinsatz kann aus Metall oder Kunststoff bestehen, besteht aber im Regelfall aus Metall, wie Stahl. Er ist gewöhnlich und zweckmässig ein Maschengewebe aus Metalldraht da bei einem solchen Maschengewebe selbst dann, wenn dieses auf einer glatten Innenwandung des Aussengehäuses voll anliegt, ausreichend Zwischenräume zwischen dieser Innenwandung und dem Siebeinsatz gebildet werden, um den Ablauf der filtrierten Flüssigkeit zu ermöglichen.

Die Filtertüten oder Rundfilter in der Form von Filtervliesen oder Filtergeweben bestehen zweckmässig aus verrottbarem Material, wie Cellulose, um ohne weiteres mit dem Filterhilfsmittel und dem Trub weggeworfen und als verrottbarer Abfall beseitigt werden zu können. Die Filtervliese oder Filtergewebe können beispielsweise aus Cellulosefasern, Baumwollfasern, Polypropylenfasern oder Polyäthylenfasern bestehen.

Die in dem erfindungsgemässen Anschwemmfilter verwendeten Filterhilfsmittel sind von üblicher Beschaffenheit, wie Kieselgur, Perlite oder Cellulose.

Die Innenwandung des Aussengehäuses ist zweckmässig glatt ausgebildet, um keine Kanäle zu haben, in denen sich die filtrierte Flüssigkeit sammeln würde.

Es ist von besonderem Vorteil, wenn die Neigung der Wandung des Aussengehäuses derart ausgebildet ist, dass in einem senkrechten Schnitt durch das Aussengehäuse die Wandung einen Winkel zwischen 45 und 75° einschliesst. Besonders günstig ist es, wenn der in dem senkrechten Schnitt durch das Aussengehäuse von der Wandung, wie den beiden geschnittenen Abschnitten des Kegelmantels, eingeschlossene Winkel etwa 60° beträgt.

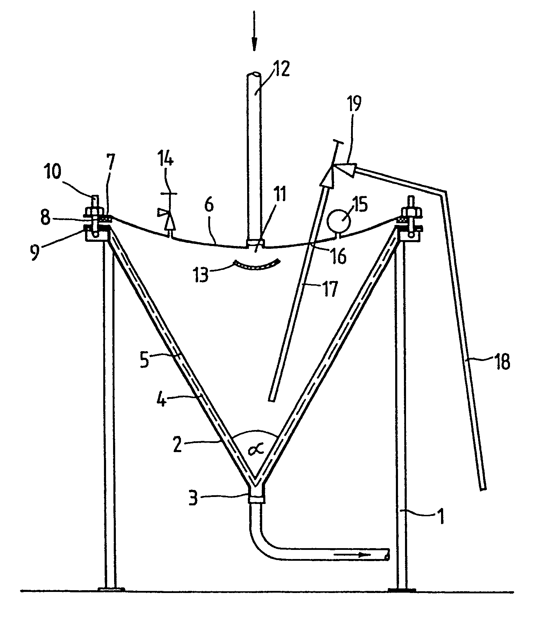

Würde der eingeschlossene Winkel, der in der Zeichnung mit α bezeichnet ist, kleiner als 20° sein, bekäme man die gleichen Nachteile wie bei senkrechten Filterplatten. Bei einem Winkel grösser als 120° bekäme man andererseits die Nachteile waagerechter Filterteller. Insbesondere in den bevorzugten engeren Bereichen und in optimaler Weise bei einem eingeschlossenen Winkel von etwa 60° werden aber die Nachteile beider bekannten Anschwemmfiltertypen vermieden.

Es ist zweckmässig, den Flüssigkeitseinlauf an dem Deckel mittig anzuordnen. Auf diese Weise bekommt man eine gleichmässige Verteilung der einlaufenden Flüssigkeit in dem gesamten Aussengehäuse.

Die in Strömungsrichtung hinter dem Flüssigkeitseinlauf angeordnete Prallplatte, die diese Einlauföffnung überdeckt, dient dazu, die in das Aussengehäuse eintretende Flüssigkeit nach den Rändern des Aussengehäuses gleichmässig zu verteilen und zu vermeiden, dass die frisch eintretende Flüssigkeit als Strahl direkt auf das verjüngte untere Ende des Aussengehäuses zuströmt.

Zweckmässig ist die Prallplatte gewölbt ausgebildet, wobei die Wölbung zu dem unteren verjüngten Ende des Aussengehäuses hin weist. Auf diese Weise tritt die zu filtrierende Flüssigkeit im wesentlichen drucklos durch den Schlitz zwischen dem Deckel und der von dem Deckel beabstandeten Prallplatte in das Aussengehäuse ein.

Der Deckel ist mit einer üblichen druckdichten Verbindung mit dem Rand des Aussengehäuses lösbar verbunden, wie über einen üblichen Dichtungsring, der den in dem Anschwemmfilter herrschenden Drücken, wie beispielsweise von etwa 4 bis 6 bar, standhält.

Beim Abstellen des Filterbetriebes bleibt Restflüssigkeit in dem Filter stehen. Um diese Menge klein zu halten, ist es zweckmässig, den Deckel nach innen gewölbt auszubilden.

Weiterhin ist es zweckmässig, in dem Deckel zusätzlich zu der Be- und Entlüftungseinrichtung eine weitere verschliessbare Öffnung vorzusehen, die mit einer ins Innere des Aussengehäuses bis in die Nähe von dessen unterem Ende ragenden Röhre verbunden ist. Diese Röhre kann beispielsweise ein starrer Schlauch sein, der beispielsweise etwa 20 bis 25 cm oberhalb des unteren Endes, wie der Kegelspitze, endet. Beim Öffnen dieser verschliessbaren Öffnung reicht der Restdruck in dem Anschwemmfilter nach der Erfindung nach dem Abstellen des Filtrierbetriebes aus, die Restflüssigkeit durch die Röhre zu drücken, wobei an der Aussenseite der verschliessbaren Öffnung zweckmässig ein weiteres Rohr angesetzt ist, so dass die gesamte Restflüssigkeit nach dem Heberprinzip unter Ausnutzung des Restdruckes abgehebert und aus dem Aussengehäuse entfernt werden kann.

Durch die Zeichnung, die einen senkrechten Schnitt durch ein Anschwemmfilter nach der Erfindung zeigt, wird diese weiter erläutert. In der Zeichnung ist auf dem Gestell 1 ein kegelförmiges Aussengehäuse 2 mit einem mittigen unteren Auslauf 3 befestigt. Im senkrechten Schnitt schliesst die Wandung des Aussengehäuses 2 einen Winkel α ein, der etwa 60° beträgt. Im Inneren des Aussengehäuses 2 befindet sich an der Innenwandung des Aussengehäuses anliegend ein ebenfalls kegelförmiger Siebeinsatz 4 und auf diesem eine kegelförmige Filtertüte 5 aus einem Filtervlies oder Filtergewebe. Auf dieser Filtertüte 5 wird dann im Betrieb der Vorrichtung das Filterhilfsmittel angeschwemmt und baut sich dort beispielsweise in einer gleichmässigen Dicke von etwa 10 bis 15 cm auf.

Der Deckel 6 des Aussengehäuses ist nach innen gewölbt, um das Volumen der Restflüssigkeit nach dem Abstellen der Vorrichtung möglichst klein zu halten. Der ringsum laufende Flansch 7 des Deckels 6 ist über einen Dichtungsring 8 ringsum mit Hilfe von Schrauben 10 mit dem Flansch 9 des Aussengehäuses 2 druckdicht verbunden.

Mittig in dem Deckel 6 befindet sich der Flüssigkeitseinlauf 11 mit dem aussen angesetzten Zulaufrohr 12. In Strömungsrichtung hinter dem Flüssigkeitseinlauf 11 und im Abstand von dem Deckel 6 ist eine nach unten gewölbte Prallplatte 13 derart angeordnet, dass sie den Flüssigkeitseinlauf 11 überdeckt. Durch diese Prallplatte 13 wird der durch den Flüssigkeitseinlauf 11 eintretenden zu filtrierenden Flüssigkeit der Druck genommen, und gleichzeitig wird die Flüssigkeit nach allen Seiten gleichmässig in dem Aussengehäuse 2 verteilt.

Weiterhin ist an dem Deckel 6 eine Be- und Entlüftungseinrichtung 14 sowie ein Manometer 15 angeordnet.

Durch eine weitere Öffnung 16 in dem Deckel 6 führt eine bis nahe an die Spitze des Kegelmantels reichende Röher 17, die über ein Verschlussorgan 19 mit einer Aussenröhre 18 verbunden ist. Im Betrieb des Filters ist das Verschlussorgan 19 verschlossen. Nach dem Abstellen der Vorrichtung wird zur Entleerung der Restflüssigkeit das Verschlussorgan 19 geöffnet, wobei der Restdruck in dem Anschwemmfilter ausreicht, zumindest so viel von der Restflüssigkeit über die Röhre 17 in die Aussenröhre 18 zu drücken, dass die gesamte Restflüssigkeit in dem Aussengehäuse 2 durch Heberwirkung abfliesst.

## Patentansprüche

1. Anschwemmfilter mit einem Aussengehäuse (2) mit einem Auslauf (3) im Bereich seines unteren Endes und mit einem mit seinem oberen Rand (9) druckdicht lösbar verbundenen Deckel (6) mit einem Flüssigkeitseinlauf (11), einer Be- und Entlüftungseinrichtung (14), einer in Strömungsrichtung hinter dem Flüssigkeitseinlauf (11), diesen überdeckend angeordneten Prallplatte (13) und einem an der Innenwand des Aussengehäuses (2) anliegenden Siebeinsatz (4) mit Einrichtungen, die das anzuschwemmende Filterhilfsmittel zurückhalten, dadurch gekennzeichnet, dass sich das Aussengehäuse (2) nach unten verjüngt und in einem senkrechten Schnitt durch das Aussengehäuse (2) die Wandung einen Winkel (α) von 30 bis 90° einschliesst.

2. Anschwemmfilter nach Anspruch 1, dadurch gekennzeichnet, dass in einem senkrechten Schnitt durch das Aussengehäuse (2) die Wandung einen Winkel (α) von 45 bis 75° einschliesst.

3. Anschwemmfilter nach einem der beiden Ansprüche 1 oder 2, dadurch gekennzeichnet, dass das Aussengehäuse (2) kegelförmig oder pyramidenförmig die Einrichtungen zum Zurückhalten des anzuschwemmenden Filterhilfsmittels aus einer ausgebildet ist.

4. Anschwemmfilter nach einem der Ansprüche 1 bis 3, dadurch gekennzeichnet, dass die Einrichtungen zum Zurückhalten des anzuschwemmenden Filterhilfsmittels aus einer auf der Innenseite des Siebeinsatzes (4) angeordneten Filtertüte (5) oder einem tütenartig gefalteter Rundfilter bestehen.

5. Anschwemmfilter nach einem der Ansprüche 1 bis 4, dadurch gekennzeichnet, dass die Prallplatte (13) zu dem unteren Ende des Aussengehäuses (2) hin gewölbt ist.

6. Anschwemmfilter nach einem der Ansprüche 1 bis 5, dadurch gekennzeichnet, dass der Deckel (6) nach innen gewölbt ist.

7. Anschwemmfilter nach einem der Ansprüche 1 bis 6, dadurch gekennzeichnet, dass in dem Deckel (6) eine weitere verschliessbare Öffnung (16) mit einer im Inneren des Aussengehäuses (2) bis in die Nähe von dessen unterem Ende ragenden Röhre (17) vorgesehen ist.

8. Anschwemmfilter nach einem der Ansprüche 1 bis 7, dadurch gekennzeichnet, dass der Flüssigkeitseinlauf (11) mittig in dem Deckel (6) angeordnet ist.

9. Anschwemmfilter nach einem der Ansprüche 1 bis 8, dadurch gekennzeichnet, dass die Innenwandung des Aussengehäuses (2) glatt ausgebildet ist.

## Claims

1. A coated filter having an external housing (2) with an outlet (3) in the region of its lower end, and a cover (6) which is pressure-tightly releasably connected to its upper edge (9), with a liquid intake (11), an air intake and discharge means (14), a baffle plate (13) which is arranged downstream of the liquid intake (11) in the direction of flow and which is arranged to cover the liquid intake, and a sieve insert (4) which lies against the inside wall surface of the external housing (2), with means for retaining the filter aid to be deposited, characterised in that the external housing (2) tapers downwardly and, in a perpendicular section through the external housing (2), the wall includes an angle (α) of 30 to 90°.

2. A filter according to claim 1, characterised in that, in a perpendicular section through the external housing (2), the wall includes an angle (α) of 45 to 75°.

3. A filter according to claim 1 or 2, characterised in that the external housing (2) is of a conical or pyramid shape.

4. A filter according to one of claims 1 to 3, characterised in that the means for retaining the filter aid to be deposited comprise a filter bag (5) which is arranged on the inside of the sieve insert (4), or a round filter which is folded in a bag-like manner.

5. A filter according to one of claims 1 to 4, characterised in that the baffle plate (13) is curved towards the lower end of the external housing (2).

6. A filter according to one of claims 1 to 5, characterised in that the cover (6) is curved inwardly.

7. A filter according to one of claims 1 to 6, characterised in that the cover has a further closable opening (16) with a pipe (17) which projects inside the external housing (2) to the vicinity of the lower end thereof.

8. A filter according to one of claims 1 to 7, characterised in that the liquid intake (11) is arranged centrally in the cover (6).

9. A filter according to one of claims 1 to 5, characterised in that the inner wall of the external housing (2) is smooth.

## Revendications

1. Filtre à préenduisage comprenant une enveloppe extérieure (2) munie, au niveau de son extrémité inférieure, d'une décharge (3) et comprenant également un couvercle (6) relié, de manière amovible mais étanche, à la pression par son bord supérieur (9) à une entrée de liquide (11), un dispositif (14) d'aérage et de dégazage, une chicane (13) disposée en arrière de l'entrée de liquide (11) dans le sens d'écoulement et recouvrant ladite entrée ainsi qu'une cartouche filtrante (4) s'appliquant étroitement contre la paroi intérieure de ladite enveloppe extérieure (2) et pourvue de dispositifs qui retiennent l'adjuvant de filtrage à amener à décanter, caractérisé en ce que l'enveloppe extérieure (2) se rétrécit côniquement vers le bas et que, dans une vue en coupe verticale au travers de ladite enveloppe extérieure (2), la paroi forme un angle ($\alpha$) de 30 à 90°.

2. Filtre à préenduisage selon la revendication 1, caractérisé en ce que, dans une vue en coupe verticale au travers de l'enveloppe extérieure (2), la paroi forme un angle ($\alpha$) compris entre 45 et 75°.

3. Filtre à préenduisage selon l'une des revendications 1 ou 2, caractérisé en ce que l'enveloppe extérieure (2) est en forme de cône ou de pyramide.

4. Filtre à préenduisage selon l'une des revendications 1 à 3, caractérisé en ce que les dispositifs destinés à retenir l'adjuvant de filtrage à amener à décanter sont formés d'un sachet-filtre (5) ou d'un filtre circulaire plié en forme de sachet disposé sur la paroi intérieure de la cartouche filtrante (4).

5. Filtre à préenduisage selon l'une des revendications 1 à 4, caractérisé en ce que la chicane (13) est bombée de telle façon que sa courbure est dirigée vers l'extrémité inférieure de l'enveloppe extérieure (2).

6. Filtre à préenduisage selon l'une des revendications 1 à 6, caractérisé en ce que le couvercle (6) est bombé vers l'intérieur.

7. Filtre à préenduisage selon l'une des revendications 1 à 6, caractérisé en ce que, dans le couvercle (6), est prévu un autre orifice (16) obturable comprenant un tube (17) dépassant à l'intérieur de l'enveloppe extérieure (2) jusqu'à proximité de l'extrémité inférieure de cette dernière.

8. Filtre à préenduisage selon l'une des revendications 1 à 7, caractérisé en ce que l'entrée de liquide (11) est disposée au centre du couvercle (6).

9. Filtre à préenduisage selon l'une des revendications 1 à 8, caractérisé en ce que la paroi interne de l'enveloppe extérieure (2) est lisse.